# FASCICULE DE BREVET EUROPEEN

(11) **EP 0 412 018 B1**
(45) Date de publication et mention de la délivrance du brevet: **31.03.1993**
(21) Numéro de dépôt: 90402231.6
(22) Date de dépôt: 03.08.1990
(51) Int. Cl.: F02D 41/36

(54) **Dispositif de détection pour le pilotage d'injection électronique d'un moteur multicylindre**
Detektionsvorrichtung zur Steuerung des elektronischen Einspritzsystems einer Brennkraftmaschine mit mehreren Zylindern
Detection device for the injection electronic control of a multi-cylinder internal combustion engine

(30) Priorité: 03.08.1989 FR 8910489
(43) Date de publication de la demande: 06.02.1991
(73) Titulaire: RENAULT VEHICULES INDUSTRIELS, 69003 Lyon (FR)
(72) Inventeur: Drutel, Yves, F-69530 Brignais (FR); Miettaux, Marc, F-69150 Decines (FR)
(74) Mandataire: Ernst-Schonberg, Michel

(56) Documents cités:
- DE-A- 3 709 092
- FR-A- 2 441 829
- GB-A- 2 183 061
- PATENT ABSTRACTS OF JAPAN, vol. 11, no. 114 (M-579)[2561], 10 avril 1987;& JP-A-61 258 969 (NIPPON DENSO CO., LTD) 17-11-1986

## Description

La présente invention concerne un dispositif de détection pour le système d'injection d'un moteur multicylindre, en particulier d'un moteur automobile, permettant de détecter la vitesse de rotation du moteur, d'effectuer en permanence un repérage angulaire du point mort haut de chaque cylindre du moteur et une identification du cylindre pour lequel l'injection de carburant doit avoir lieu.

Habituellement, les systèmes de détection de ce genre comportent deux cibles sous forme de couronnes dentées montées sur l'axe de rotation de la pompe à injection ou du moteur, les cibles coopérant avec deux ou trois capteurs pour fournir d'une part la vitesse de rotation du moteur et le repérage angulaire des points morts hauts du moteur, et d'autre part l'identification du cylindre dans lequel l'injection de carburant doit avoir lieu au cours du cycle du moteur.

De tels systèmes de détection sont relativement encombrants, coûteux et d'un montage délicat. Leur principe de détection est généralement basé sur une variation d'un champ magnétique créé entre les capteurs et les couronnes dentées en matériau ferromagnétique. Lorsque la vitesse de rotation du moteur est lente, la variation du champ magnétique n'est pas suffisamment significative pour permettre une bonne sensibilité de mesure. En outre, dans le cas où l'un des capteurs tombe en panne, c'est-à -dire en mode de fonctionnement dégradé du moteur, les systèmes de mesure classiques ne permettent pas de fournir suffisamment d'informations au système de pilotage d'injection électronique du moteur, ce qui entraîne l'arrêt immédiat du moteur.

Le document FR-A-2 441 829 décrit un dispositif de détection plus élaboré utilisant un seul disque émetteur ou cible comportant deux groupes d'éléments de repérage susceptibles d'être distingués tels que des pôles magnétiques Nord et Sud répartis de façon alternée sur sa périphérie. Toutefois, la mise en oeuvre de ce système s'avère extrêmement délicate.

La présente invention a pour objet de pallier les inconvénients des systèmes susmentionnés en proposant un dispositif de détection simple et efficace pour le système d'injection électronique d'un moteur multicylindre.

Un autre objet de l'invention est de réaliser un dispositif de détection, pour le système d'injection électronique d'un moteur multicylindre, multifonction, compact, facile à monter et de structure nouvelle.

L'invention a pour but également de procurer un moyen de calage initial du système d'injection sans utilisation de capteur ou dispositif additionnel.

L'invention a également pour objet un dispositif de détection pour moteur de véhicule automobile, capable de fournir suffisamment d'informations au système de pilotage d'injection électronique en mode dégradé.

Selon l'invention, le dispositif de détection consiste à mesurer les variations d'un champ magnétique générées par une couronne multipolaire adaptée sur le moteur multicylindre et comportant une pluralité de pôles magnétiques Nord et Sud répartis de façon alternée sur sa périphérie, grâce à une paire de capteurs sensibles au champ magnétique, tels que les capteurs à effet de Hall, les capteurs magnétorésistifs ou autres, et délivrant un signal image du champ magnétique. Les capteurs sont espacés angulairement l'un et l'autre et disposés en regard de la périphérie de la couronne multipolaire qui est subdivisée en un nombre de secteurs égal au nombre de cylindres du moteur, l'un des secteurs étant entièrement constitué par un pôle magnétqique unique, les autres secteurs étant constitués d'une pluralités de pôles magnétiques ; l'espace angulaire entre la paire de capteurs étant égal ou plus grand que l'espace angulaire d'un secteur.

Le dispositif de détection, selon l'invention, permet notamment d'équiper un système d'injection électronique pour moteur multicylindre, tel qu'un moteur pour véhicule automobile, en vue en particulier de mesurer la vitesse de rotation du moteur, de repérer en permanence la position angulaire du point mort haut de chaque cylindre du moteur et d'identifier à tout moment l'un des cylindres du moteur pour lequel l'injection de carburant doit avoir lieu.

Selon l'invention, le dispositif comprend une couronne multipolaire rigide rendue solidaire autour de l'axe de rotation de la pompe du système d'injection électronique et à l'intérieur de la pompe. Sur le pourtour de la couronne sont répartis une pluralité de pôles magnétiques Nord et Sud alternés; deux capteurs à effet Hall fixés à l'intérieur de la pompe, dirigés radialement vers l'axe de rotation de la pompe en regard de la périphérie extérieure de la couronne selon un plan transversal à l'axe de la pompe, et espacés angulairement l'un de l'autre; une interface électronique de traitement reliée aux deux capteurs et pouvant fournir des signaux de détection pour un calculateur de pilotage du système d'injection électronique.

Selon un mode préféré de réalisation de l'invention, la couronne multipolaire est subdivisée en autant de secteurs géométriquement identiques qu'il y a de cylindres dans le moteur. L'un des secteurs est entièrement constitué par un pôle magnétique unique. Chacun des autres secteurs est constitué d'au moins deux petits pôles magnétiques consécutifs de faible étendue angulaire chacun et d'un grand pôle magnétique dont l'étendue angulaire est supérieure à une fois et demie de celle d'un petit pôle magnétique.

La présence d'un secteur monopolaire sur la couronne permet, en calant ce secteur avec l'un des cylindres du moteur, de pouvoir repérer ledit cylindre lorsque la couronne multipolaire est entraînée en rotation par l'axe de la pompe à injection.

De préférence, tous les petits pôles de la couronne sont d'étendue angulaire identique. Tous les grand pôles de la couronne sont également identiques géométriquement et sont séparés par le même intervalle l'un de l'autre.

Les deux capteurs à effet Hall sont de préférence espacés angulairement l'un de l'autre par un intervalle correspondant à un multiple de l'étendue angulaire d'un secteur de la couronne multipolaire.

La couronne multipolaire est constituée par un nombre pair de pôles magnétiques alternés sur son pourtour. Soit n le nombre de cylindres du moteur, la couronne multipolaire présente alors n secteurs dont l'un est constitué par un pôle magnétique unique. Les n-1 autres secteurs de la couronne présentent alors au total un nombre impair de pôles magnétiques.

Dans le cas où le moteur comporte un nombre pair de cylindres, c'est-à-dire lorsque n est un nombre pair, les n-1 secteurs, en nombre impair, peuvent comporter chacun un nombre impair de pôles magnétiques alternés afin d'obtenir un nombre impair de pôles magnétiques pour l'ensemble des n-1 secteurs de la couronne. Chacun desdits n-1 secteurs présente alors de préférence un grand pôle et un nombre pair de petits pôles successifs.

Dans le cas où le nombre n de cylindres du moteur est impair, les n-1 secteurs, en nombre pair, de la couronne multipolaire doivent présenter un nombre impair de pôles magnétiques au total. On peut alors envisager de réaliser l'un des n-1 secteurs avec le nombre de pôles magnétiques de parité différente de celle des n-2 secteurs restants qui comportent un nombre de pôles magnétiques identique l'un à l'autre. Autrement dit, lorsque les n-2 secteurs présentent chacun un nombre pair de pôles, ledit secteur comporte un nombre impair de pôles; lorsque chacun des n-2 secteurs présente un nombre impair de pôles, ledit secteur comporte un nombre pair de pôles magnétiques.

L'invention sera mieux comprise à l'étude de la description détaillée d'un mode de réalisation particulier de l'invention pris à titre nullement limitatif et illustré par des dessins annexés, sur lesquels :
la figure 1 est une vue schématique d'une couronne multipolaire selon l'invention;
la figure 2 est une vue schématique montrant le fonctionnement du dispositif de l'invention; et
la figure 3 représente des signaux générés par le dispositif de l'invention correspondant à la figure 2.

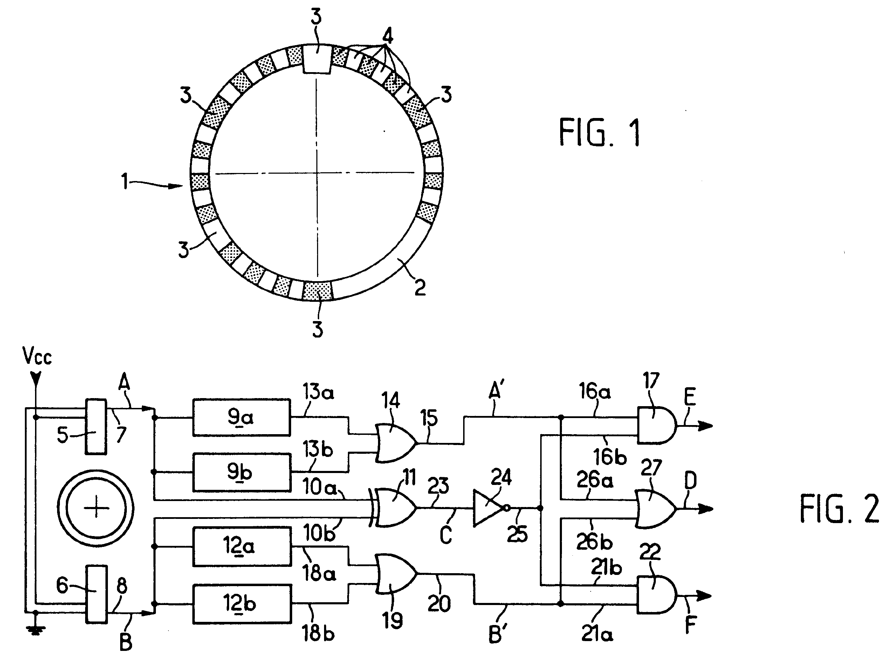

Comme illustré sur la figure 1, le dispositif de détection selon l'invention, comprend une couronne multipolaire 1 rigide montée autour de l'axe de rotation, non représenté, de la pompe du système d'injection électronique d'un moteur de véhicule automobile et à l'intérieur de la pompe. Le diamètre de la couronne 1 doit être relativement petit, de l'ordre de 40 mm, pour permettre son montage à l'intérieur de la pompe. La couronne doit être réalisée en matériau rigide polarisable magnétiquement tel que la plastoferrite ou un autre matériau permettant de supporter des pôles magnétiques.

Dans cet exemple, la couronne multipolaire 1 est constituée de 36 poles magnétiques Nord et Sud alternés dont 35 sont répartis sur 300°, le 36ème pôle magnétique occupant un secteur 2 complet de 60°. La couronne 1 étant subdivisée en six secteurs de 60°, chacun des cinq secteurs autres que le secteur 2 est constitué de 7 pôles magnétiques consécutifs alternativement Nord-Sud, le 7ème pôle magnétique 3 étant deux fois plus étendu angulairement que chacun des six autres pôles magnétiques 4 du secteur. Chacun des six secteurs de la couronne multipolaire 1 correspond à un cylindre d'un moteur de véhicule automobile à six cylindres, non représenté.

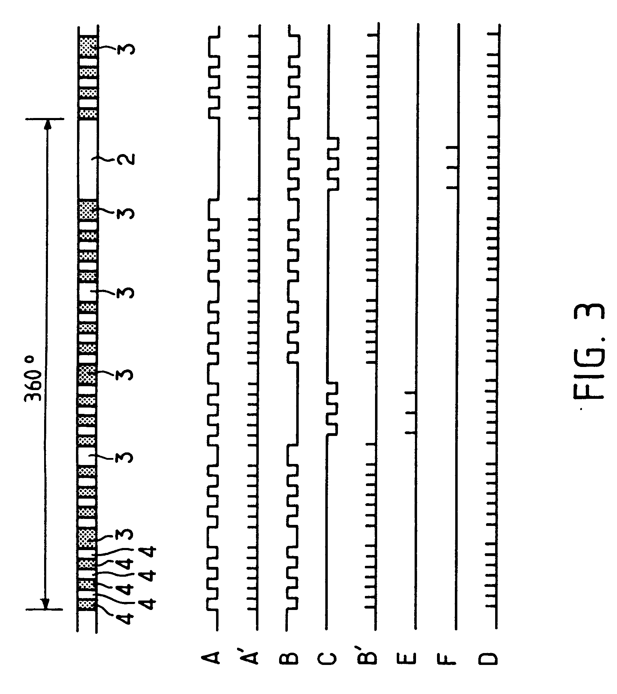

Tel qu'il est illustré sur les figures 2 et 3, le dispositif de l'invention comprend en outre deux capteurs 5 et 6 fixés sur le carter de la pompe à injection et positionnés de manière diamètralement opposée face à la couronne multipolaire avec un entrefer de l'ordre 0,4 mm. Les capteurs 5 et 6 sont de technologie effet Hall dimensionnés de manière à pouvoir détecter les différences de champ magnétique généré par deux pôles magnétiques successifs de polarité inverse. Ils comportent chacun un moyen électronique, non représenté, de mise en forme des signaux électroniques, de manière à pouvoir générer deux états binaires : un état bas face à un pôle magnétique et un état haut face au pôle magnétique suivant de polarité différente.

Les capteurs à effet Hall 5 et 6 sont alimentés par une source de tension en courant continu Vcc et délivrent à leurs sorties respectives 7 et 8 chacun un signal binaire A et B. Le signal A à la sortie 7 du capteur 5 alimente respectivement un monostable à front montant 9a, un monostable à front descendant 9b et une entrée 10a d'une porte logique OU exclusive 11. De même, le signal B à la sortie 8 du capteur 6 alimente respectivement un monostable à front montant 12a, un monostable à front descendant 12b et une deuxième entrée 10b de la porte logique 11.

Les sorties 13a et 13b des monostables 9a et 9b sont reliées aux entrées d'une porte logique OU 14 dont la sortie 15 est reliée à une entrée 16a d'une porte logique ET 17. De même, les sorties 18a et 18b des monostables 12a et 12b sont reliées aux entrées d'une logique OU 19 dont la sortie 20 est reliée à une entrée 21a d'une seconde porte logique ET 22.

La sortie 23 de la porte logique OU exclusive 11 est reliée à un inverseur 24 dont la sortie 25 est reliée respectivement à une seconde entrée 16b de la première porte logique ET 17 et à la seconde entrée 21b de la seconde porte logique ET 22.

Les sorties 15 et 20 des portes logiques OU 14 et 19 sont également reliées respectivement aux entrées 26a et 26b d'une troisième porte logique OU 27.

Les monostables 9a, 9b, 12a, 12b, les portes logiques 11, 14, 17, 19, 22, 27, l'inverseur 24 ainsi que les connexions constituent l'interface électronique de traitement du dispositif selon l'invention.

A la partie supérieure de la figure 3 est représentée la couronne multipolaire 1 en développement sur 360°. La partie inférieure de la figure 3 montre des séquences de signaux générés à différentes étapes du dispositif de l'invention.

Les signaux A et B générés par les deux capteurs à effet Hall 5 et 6 sont traités par l'interface électronique qui a pour rôle de créer des signaux D, E et F nécessaires au calculateur de pilotage de l'injection électronique.

Le signal binaire A à la sortie 7 du capteur 5 est d'abord traité par les monostables 9a et 9b et additionné par la porte logique OU 14 dont la sortie 15 délivre un signal A′ sous forme d'impulsions, chacune desdites impulsions correspondant à un changement d'état binaire du signal A et donc à un passage d'un pôle magnétique au pôle suivant de polarité différente de la couronne multipolaire 1. De même, le signal B′ sous forme d'impulsions représente des transitions binaires du signal B à l'aide des monostables 12a, 12b et de la porte logique OU 19.

Les signaux A′ et B′ sont sommés par la porte logique OU 27 pour générer un signal de sortie D, qui a la particularité de fournir au calculateur de pilotage un signal identique tous les 60° de rotation du moteur. Le signal D permet ainsi au calculateur de contrôler la vitesse de rotation du moteur sept fois tous les 60°, six fois régulièrement distantes de 7,5° et une septième fois espacée de 15°, cette dernière impulsion démarquée des précédentes permettant au calculateur d'obtenir une référence angulaire pour le point mort haut de chaque cylindre.

Les entrées 10a et 10b de la porte logique OU exclusive 11 sont reliées respectivement aux sorties 7 et 8 des capteurs 5 et 6. Les signaux binaires A et B après avoir traversé la porte logique 11 deviennent un signal binaire C qui sera complémenté par l'inverseur 24. Les portes logiques ET 17 et 22 permettent, à partir du complément du signal C et des signaux A′ et B′, d'obtenir respectivement les signaux E et F qui seront transmis au calculateur.

Les signaux E et F générés par l'interface permettent de renseigner le calculateur sur le repérage du cylindre à piloter sur le cycle du moteur (six cylindres dans cet exemple). Chacun des signaux E et F va permettre de repérer un cylindre parmi trois à chaque tour de rotation du moteur, et permet donc au calculateur de contrôler le cylindre à piloter.

La présence de trois impulsions calibrées dans chacun des signaux E et F pour le repérage d'un cylindre permettra au calculateur de discriminer les impulsions parasites du signal réellement généré par la couronne multipolaire. Cela permet une bonne immunité aux bruits et évite tout fonctionnement perturbé du dispositif.

Le dispositif de détection, selon l'invention, permet donc d'informer le calculateur de pilotage de l'injection : sur la vitesse de rotation du moteur; sur la position angulaire correspondant au point mort haut de chaque cylindre du moteur; et sur le cylindre à piloter parmi les six possibles sur une rotation complète de la pompe à injection.

La présence des capteurs à effet Hall 5 et 6 permet de disposer d'une information binaire de pôle Nord ou de pôle Sud avec une transition franche d'un pôle à l'autre même à une vitesse très basse de rotation du moteur, ce qui permet d'avoir une bonne sensibilité de détection du dispositif.

De plus, la combinaison des deux capteurs 5 et 6 et de la couronne multipolaire, selon l'invention, permet, au cas où l'un des capteurs tombe en panne, de générer suffisamment d'informations pour piloter le système d'injection dans le but de pouvoir continuer l'utilisation du moteur dans un mode dégradé.

## Revendications

1. Dispositif de détection de la position angulaire et de mesure de la vitesse angulaire de l'axe d'une pompe à injection d'un moteur multicylindre et permettant de repérer un cylindre du moteur pour lequel l'injection de carburant doit avoir lieu, comportant une couronne multipolaire (1) rigide rendue solidaire de l'axe de la pompe et présentant une pluralité de pôles magnétiques Nord et Sud répartis de façon alternée sur sa périphérie, caractérisé en ce que la couronne (1) est subdivisée en un nombre de secteurs égal au nombre de cylindres du moteur, l'un des secteurs (2) étant entièrement constitué par un pôle magnétique unique. et les autres secteurs (2) étant constitués par plusieurs pôles magnétiques, ladite couronne coopérant avec une paire de capteurs sensibles au champ magnétique (5, 6) espacés angulairement l'un de l'autre, l'espace angulaire entre la paire de capteurs étant égal ou plus grand que l'espace angulaire d'un secteur, et dispersés en regard de la périphérie de la couronne.

2. Dispositif de détection selon la revendication 1 pour équiper un système d'injection électronique d'un moteur multicylindre, tel qu'un moteur pour véhicule automobile, en vue en particulier de mesurer la vitesse de rotation du moteur, de repérer en permanence la position angulaire du point mort haut de chaque cylindre du moteur et d'identifier à tout moment l'un des cylindres du moteur pour lequel l'injection de carburant a lieu, caractérisé par le fait qu'il comprend :
- une couronne multipolaire (1) rigide et rendue solidaire autour de l'axe de la pompe du système d'injection électronique à l'intérieur de la pompe et sur le pourtour de laquelle sont répartis une pluralité de pôles magnétiques (2, 3, 4) Nord et Sud alternés ;
- deux capteurs à effet Hall (5, 6) fixés de manière à être dirigés radialement vers l'axe de rotation de la pompe en regard de la périphérie extérieure de la couronne multipolaire (1) selon un plan transversal et espacés angulairement l'un de l'autre ;
- une interface électronique de traitement reliée aux deux capteurs à effet Hall et pouvant fournir des signaux de détection (D, E, F) pour un calculateur de pilotage du système d'injection électronique.

3. Dispositif de détection selon la revendication 2, caractérisé par le fait que la couronne multipolaire (1) est subdivisée en autant de secteurs géométriquement identiques qu'il y a de cylindres du moteur, l'un des secteurs (2) étant entièrement constitué par un pôle magnétique unique, chacun des autres secteurs étant constitué d'au moins deux petits pôles magnétiques (4) consécutifs et d'un grand pôle magnétique (3) à une extrémité.

4. Dispositif de détection selon la revendication 2 ou 3, caractérisé par le fait que la couronne multipolaire (1) comporte un nombre pair de pôles magnétiques disposés de façon alternée sur son pourtour.

5. Dispositif de détection selon la revendication 3 ou 4, caractérisé par le fait que les petits pôles (4) sont de taille identique, et que les grands pôles (3) sont de taille identique et espacés l'un de l'autre par un même intervalle, la taille de chaque grand pôle étant au moins supérieure à une fois et demie la taille d'un petit pôle magnétique.

6. Dispositif de détection selon l'une quelconque des revendications 3 à 5, caractérisé par le fait que les capteurs à effet Hall (5, 6) sont espacés l'un de l'autre d'un intervalle correspondant à un multiple de l'étendue d'un secteur de la couronne multipolaire (1).

7. Dispositif de détection selon l'une quelconque des revendications 3 à 6, caractérisé par le fait que lorsque le moteur comporte un nombre pair de cylindres, chaque secteur de la couronne multipolaire présente un nombre impair de pôles magnétiques.

8. Dispositif de détection selon l'une quelconque des revendications 3 à 6, caractérisé par le fait que lorsque le moteur comporte un nombre impair de cylindres, à l'exception du secteur (2) à un seul pôle magnétique, l'un des secteurs de la couronne multipolaire (1) comporte des pôles magnétiques dont le nombre est de parité différente des autres secteurs restants, chacun desdits secteurs restants comportant le même nombre de pôles magnétiques l'un par rapport à l'autre.

9. Dispositif de détection selon l'une quelconque des revendications 2 à 8, caractérisé par le fait que l'interface électronique comporte deux paires de monostables (9a, 9b; 12a, 12b) reliées chacune d'une part à un capteur à effet Hall (5, 6) et d'autre part à une porte logique OU (14, 19); une porte logique OU exclusive (11) dont les entrées (10a, 10b) sont reliées respectivement aux sorties (7, 8) des capteurs à effet Hall (5, 6); un inverseur (24) relié à la sortie (23) de la porte logique OU exclusive (11) pour alimenter respectivement une entrée (16b, 21b) de porte logique ET (17, 22), l'autre entrée (16a, 21a) de porte logique ET (17, 22) étant connectée respectivement aux sorties (15, 20) des portes logiques OU (14, 19); une porte logique OU (27) dont les entrées (26a, 26b) sont reliées respectivement aux sorties (15, 20) des portes logiques OU (14, 19), de telle sorte que des signaux de détection (A, B) issus des capteurs (5, 6) soient traités en signaux de sortie (D, E, F) issus respectivement des portes logiques (27, 17, 22) pour renseigner le calculateur de pilotage de l'injection électronique.

## Patentansprüche

1. Vorrichtung zur Detektion der Winkelstellung und zur Messung der Winkelgeschwindigkeit der Achse einer Einspritzpumpe eines Motors mit mehreren Zylindern und zur Markierung eines Motorzylinders, in den der Treibstoff eingespritzt werden soll, mit einem mehrpoligen steifen Kranz (1), der fest mit der Achse der Pumpe verbunden ist und der eine Vielzahl magnetischer Nord- und Südpole aufweist, die abwechselnd entlang des Umfangs verteilt sind, dadurch gekennzeichnet, daß der Kranz (1) unterteilt ist in eine Anzahl von Sektoren gleich der Anzahl der Zylinder des Motors, wobei einer der Sektoren (2) vollständig aus einem einzigen magnetischen Pol besteht und die anderen Sektoren (2) aus mehreren magnetischen Polen bestehen und daß der Kranz mit einem Paar auf das Magnetfeld ansprechender Fühler (5, 6) zusammenwirkt, die winkelmäßig getrennt voneinander angeordnet sind, wobei der Winkelabstand zwischen dem Fühlerpaar gleich oder gröber ist als der Winkelabstand eines Sektors und wobei sie gegenüber dem Kranzumfang angeordnet sind.

2. Vorrichtung zur Detektion nach Anspruch 1, zur Ausrüstung eines elektronischen Einspritzsystems eines Motors mit mehreren Zylindern, wie z.B. eines Kraftfahrzeugmotors, insbesondere im Hinblick auf die Messung der Drehgeschwindigkeit des Motors, der permanenten Markierung der Winkelstellung des oberen Totpunktes eines jeden Zylinders des Motors und der Identifizierung zu jedem Zeitpunkt desjenigen Zylinders des Motors, in dem die Einspritzung stattfindet, dadurch gekennzeichnet, daß sie aufweist:
- einen steifen mehrpoligen Kranz (1), der fest mit der Achse der Pumpe des elektronischen Einspritzsystems innerhalb der Pumpe verbunden ist, wobei entlang seines Umfangs eine Vielzahl magnetischer Nord- und Südpole (2, 3, 4) abwechselnd verteilt sind;
- zwei Hall-Effekt-Fühler (5, 6), die derart befestigt sind, daß sie sich radial in Richtung der Drehachse der Pumpe und gegenüber dem Außenumfang des mehrpoligen Kranzes (1) in einer Querebene erstrecken und winkelmäßig einen Abstand voneinander aufweisen;
- eine elektronische Verarbeitungseinheit, die mit den beiden Hall-Effekt-Fühlern verbunden ist zur Erzeugung von Detektionssignalen (D, E, F) für einen Steuerrechner des elektronischen Einspritzsystems.

3. Vorrichtung zur Detektion nach Anspruch 2, dadurch gekennzeichnet, daß der mehrpolige Kranz (1) unterteilt ist in so viel geometrisch identische Sektoren wie Motorzylinder vorhanden sind, wobei einer der Sektoren (2) vollständig aus einem einzigen magnetischen Pol besteht und jeder der anderen Sektoren aus wenigstens zwei aufeinanderfolgenden kleinen magnetischen Polen (4) und einem großen magnetischen Pol (3) an einem Ende besteht.

4. Vorrichtung zur Detektion nach Ansprüchen 2 oder 3, dadurch gekennzeichnet, daß der mehrpolige Kranz (1) eine gerade Anzahl magnetischer Pole aufweist, die abwechselnd entlang seines Umfangs angeordnet sind.

5. Vorrichtung zur Detektion nach Ansprüchen 3 oder 4, dadurch gekennzeichnet, daß die kleinen Pole (4) identische Abmessungen aufweisen und daß die großen Pole (3) identische Abmessungen aufweisen und voneinander durch den gleichen Abstand getrennt sind, wobei die Abmessung eines jeden großen Poles wenigstens 1 1/2 Mal so groß wie die Abmessung eines kleinen magnetischen Pols ist.

6. Vorrichtung zur Detektion nach einem der Ansprüche 3 bis 5, dadurch gekennzeichnet, daß die Hall-Effekt-Fühler (5, 6) voneinander einen Abstand aufweisen entsprechend einem Mehrfachen der Ausdehnung eines Sektors des mehrpoligen Kranzes (1).

7. Vorrichtung zur Detektion nach einem der Ansprüche 3 bis 6, dadurch gekennzeichnet, daß jeder Sektor des mehrpoligen Kranzes eine ungerade Anzahl magnetischer Pole aufweist, wenn der Motor eine gerade Anzahl Zylinder aufweist.

8. Vorrichtung zur Detektion nach einem der Ansprüche 3 bis 6, dadurch gekennzeichnet, daß mit Ausnahme des Sektors (2) mit einem einzigen magnetischen Pol einer der Sektoren des mehrpoligen Kranzes (1) im Falle eines Motors mit einer ungeraden Anzahl von Zylindern magnetische Pole aufweist, deren Anzahl ungleich ist zu derjenigen der verbleibenden Sektoren, wobei jeder verbleibende Sektor die gleiche Anzahl magnetischer Pole aufweist.

9. Vorrichtung zur Detektion nach einem der Ansprüche 2 bis 8, dadurch gekennzeichnet, daß die elektronische Einheit zwei Paar monostabiler Schaltungen (9a, 9b; 12a, 12b) aufweist, deren jede einerseits mit einem Hall-Effekt-Fühler (5, 6) und andererseits mit einer logischen ODER-Schaltung (14, 19) verbunden ist; eine logische Exklusiv-ODER-Schaltung (11) ist mit ihren Eingängen (10a, 10b) mit den entsprechenden Ausgängen (7, 8) der Hall-Effekt-Fühler (5, 6) verbunden; ein Inverter (24) ist mit dem Ausgang (23) der logischen Exklusiv-ODER-Schaltung (11) verbunden, um den entsprechenden Eingang (16b, 21b) der logischen UND-Schaltung (17, 22) zu versorgen, wobei der andere Eingang (16a, 21a) der logischen UND-Schaltung (17, 22) mit den entsprechenden Ausgängen (15, 20) der logischen ODER-Schaltung (14, 19) verbunden ist; eine logische ODER-Schaltung (27) ist mit ihren Eingängen (26a, 26b) mit den entsprechenden Ausgängen (15, 20) der logischen ODER-Schaltungen (14, 19) dergestalt verbunden, daß die Detektionssignale (A, B), die von den Fühlern (5, 6) stammen, in Ausgangssignale (D, E, F) umgewandelt werden, die an den logischen Schaltungen (27, 17, 22) anstehen, um in den Steuerrechner der elektronischen Einspritzung eingespeist zu werden.

## Claims

1. A device for detecting the angular position and for measuring the angular speed of the axis of an injection pump of a multi-cylinder engine and making it possible to identify a cylinder of the engine in respect of which fuel injection must take place, comprising a rigid multipolar crown (1) made rigid with the axis of the pump and having a plurality of north and south magnetic poles distributed alternately over its periphery, characterized in that the crown (1) is sub-divided into a number of sectors equal to the number of engine cylinders, one of the sectors (2) being completely formed by a single magnetic pole and the other sectors (2) being formed by a plurality of magnetic poles, the crown cooperating with a pair of sensors sensitive to the magnetic field (5, 6) which are angularly spaced with respect to one another, the angular space between the pair of sensors being equal to or larger than the angular space of a sector, and dispersed opposite the periphery of the crown.

2. A detection device as claimed in claim 1 adapted to equip an electronic injection system of a multi-cylinder engine, such as an automobile vehicle engine, in order in particular to measure the speed of rotation of the engine, continuously to identify the angular position of the top dead centre of each engine cylinder and to identify at any moment one of the cylinders of the engine in respect of which fuel injection is necessary, characterized in that it comprises:
- a rigid multipolar crown (1) made rigid about the axis of the pump of the electronic injection system within the pump, a plurality of alternate north and south magnetic poles (2, 3, 4) being distributed about its periphery;
- two Hall effect sensors (5, 6) secured so as to be directed radially towards the axis of rotation of the pump opposite the outer periphery of the multipolar crown (1) in a transverse plane and angularly spaced with respect to one another;
- an electronic processing interface connected to the two Hall effect sensors and adapted to supply detection signals (D, E, F) for a computer driving the electronic injection system.

3. A detection device as claimed in claim 2, characterized in that the multipolar crown (1) is sub-divided into as many geometrically identical sectors as there are engine cylinders, one of the sectors (2) being completely formed by a single magnetic pole, each of the other sectors being formed by at least two consecutive small magnetic poles (4) and a large magnetic pole (3) at one end.

4. A detection device as claimed in claim 2 or 3, characterized in that the multipolar crown (1) comprises an even number of magnetic poles disposed alternately about its periphery.

5. A detection device as claimed in claim 3 or 4, characterized in that the small poles (4) are of identical size and in that the large poles (3) are of identical size and spaced by the same interval from one another, the size of each large pole being at least one and a half times greater than the size of a small magnetic pole.

6. A detection device as claimed in any one of claims 3 to 5, characterized in that the Hall effect sensors (5, 6) are spaced from one another by an interval corresponding to a multiple of the size of a sector of the multipolar crown (1).

7. A detection device as claimed in any one of claims 3 to 6, characterized in that when the engine comprises an even number of cylinders, each sector of the multipolar crown has an odd number of magnetic poles.

8. A detection device as claimed in any one of claims 3 to 6, characterized in that when the engine comprises an odd number of cylinders, with the exception of the sector (2) having a single magnetic pole, one of the sectors of the multipolar crown (1) comprises magnetic poles whose number is of parity differing from the other remaining sectors, each of these remaining sectors each comprising the same number of magnetic poles.

9. A detection device as claimed in any one of claims 2 to 8, characterized in that the electronic interface comprises two pairs of monostable circuits (9a, 9b; 12a, 12b) each connected, on the one hand, to a Hall effect sensor (5, 6) and, on the other hand, to a logic OR gate (14, 19), an exclusive OR logic gate (11) whose inputs (10a, 10b) are respectively connected to the outputs (7, 8) of the Hall effect sensors (5, 6), an inverter (24) connected to the output (23) of the exclusive OR logic gate (11) for the respective supply of an input (16b, 21b) of a logic AND gate (17, 22), the other input (16a, 21a) of the logic AND gate (17, 22) being connected respectively to the outputs (15, 20) of the logic OR gates (14, 19), a logic OR gate (27) whose inputs (26a, 26b) are respectively connected to the outputs (15, 20) of the logic OR gates (14, 19) such that the detection signals (A, B) supplied by the sensors (5, 6) are processed as output signals (D, E, F) supplied respectively by the logic gates (27, 17, 22) to inform the computer driving the electronic injection.
